# EUROPEAN PATENT SPECIFICATION

(11) **EP 2 426 167 B1**
(45) Date of publication and mention of the grant of the patent: **17.07.2013**
(21) Application number: 11179351.9
(22) Date of filing: 30.08.2011
(51) Int. Cl.: C08K 5/00

(54) **Thermally stabilized chlorine containing polymers**
Wärmestabilisierte chlorinhaltige Polymere
Polymères contenant du chlore stabilisé thermiquement

(30) Priority: 06.09.2010 IT VA20100062
(43) Date of publication of application: 07.03.2012
(73) Proprietor: Lamberti SPA, 21041 Albizzate (VA) (IT)
(72) Inventor: Romagnano, Stefano, 20020 Lainate (MI) (IT); Li, Cong, Beijing Beijing 100036 (CN); Poyre', Maurizio, 20094 Corsico (MI) (IT); Mari, Flavio, 21055 Gorla Minore (VA) (IT); Floridi, Giovanni, 28100 Novara (IT); Li Bassi, Giuseppe, 21026 Gavirate (VA) (IT)
(74) Representative: Giaroni, Paola

(56) References cited:
- US-A- 3 070 608
- US-A1- 2004 054 043
- US-A1- 2005 043 451

## Description

### Technical field

The present invention relates to thermally stabilized chlorine containing polymers comprising esters of epoxidized fatty acids and tertiary alkanolamine, an inorganic salt and an organic phosphite. In particular the present invention relates to stabilized polymers based on PVC.

### State of the Art

The PVCs and chlorine containing polymers in general terms can be thermally stabilized with a great number of additives. Particularly useful for this scope are the salts of Pb, Cd, Ba with fatty acids, but their use is today restricted because of toxicological and environmental limitations. The fact that these additives contain heavy metals, renders them dangerous for the health, also because, being salts of fatty acids, they are easily absorbed and have high compatibility with some biological fluid. The effect does not impact only on the health of the users of the final manufactured PVC articles, but also on the health of the operators that are assigned to the transformation of the PVC and of the producers of the stabilizers. Beside the conventional toxicological effects these products can have a negative eco-toxicological activity, in particular on aquatic organisms, since they can bio-accumulate and enter in the food chain.

Another problem, that concerns liquid stabilizers, is the possibility that they release volatile organic compounds (VOC). The availability of liquid VOC-free stabilizers is very important for applications of formulations of plasticized PVC, for which an elevated transparency of the manufactured articles is required.

Therefore, the development of effective liquid stabilizers, which are free of heavy metal and do not release VOC, is more and more required.

The use of organic stabilizers can give a remarkable contribution to reach this objective, making available *"green"* stabilizers of elevated efficiency. Various organic compound mixtures, in particular in combination with inorganic perchlorates, have been proposed for this scope.

The combination of several epoxides and inorganic perchlorates is recognized as a mixture able to thermally stabilize effectively flexible PVC, as reported for example in US 5,543,449 and US 5, 519,077. Epoxidized vegetable oils, mainly epoxidized triglycerides of oleic acid, linoleic acid and linolenic acid are normally used as plasticizers and in combination with perchlorate and phosphite they show only marginally an effect of thermal stabilization.

Surprisingly we have discovered that esters of epoxidized fatty acids and tertiary alkanolamines develop an elevated activity of thermal stabilization of the chlorine containing polymers when used in combination with inorganic salts and organic phosphites. This mixture shows a better activity in comparison with the products that are currently present in the market of liquid stabilizers, both of the traditional type, such as calcium and zinc soaps, or products of organic nature free of metallic cations.

### Summary of the invention

It is therefore an object of the invention a thermally stabilized chlorine containing polymer comprising:
a) from 0.2 to 3.0 parts in weight based on 100 parts in weight of chlorine containing polymer (phr, parts per hundred of resin) of an ester of epoxidized fatty acids and tertiary alkanolam ines;
b) from 0.01 to 5.0 phr of an inorganic salt chosen among perchlorate, hexafluorophosphate, hexafluoroantimonate, tetrafluoroborate, trifluoroacetate, trifluoromethanesulfonate (triflate), phosphotungstate and mixtures thereof;
c) from 0.01 to 10 phr of an organic phosphite.

It is a further object of the invention a process for thermally stabilizing a chlorine containing polymer comprising dispersing in said chlorine containing polymer:
a) from 0.2 to 3.0 phr of an ester of epoxidized fatty acids and tertiary alkanolam ines;
b) from 0.01 to 5.0 phr of an inorganic salt chosen among perchlorate, hexafluorophosphate, hexafluoroantimonate, tetrafluoborate, trifluoroacetate, trifluoromethanesulfonate (triflate), phosphotungstate and mixtures thereof;
c) from 0.01 to 10 phr of an organic phosphite.

The manufactured articles obtained from the chlorine containing thermally stabilized polymer are another object of the present invention.

### Detailed description of the invention

Preferably, said thermally stabilized chlorine containing polymer com prises:
a) from 0.5 to 2.0 phr of an ester of epoxidized fatty acids and tertiary alkanolam ines;
b) from 0.01 to 0.5 phr of an inorganic salt chosen among perchlorate, hexafluorophosphate, hexafluoroantimonate, tetrafluoborate, trifluoroacetate, trifluoromethanesulfonate (triflate), phosphotungstate and mixtures thereof;
c) from 0.01 to 5.0 phr of an organic phosphite.
The esters of epoxidized fatty acids with tertiary alkanolam ines, used in the present invention, can be obtained through any of the reactions reported in literature and known to the experts in the art, as an example by means of esterification reactions of tertiary alkanolamines and epoxidized fatty acids such as epoxidized oleic, linoleic or linolenic acid, eventually in the presence of an opportune catalyst. Or they can be obtained through reactions of trans-esterification of fatty acid esters, for example a methyl ester, and a tertiary alkanolamines.
US 3,070,608 describes a method for the preparation of epoxidized fatty acid esters by means of reaction of alcoholysis of epoxidized fatty acid esters with mono-, di- or poly-alcohol, in the presence of a basic catalyst. The patent reports that the esters obtained through trans-esterification in the described conditions show only an light decrement of the total content of epoxy groups in comparison with the starting esters. The preferred method for the preparation of said esters is by trans-esterification and particularly preferred is the method described in US 3,070,608.

Suitable tertiary alkanolamines for the alcoholysis reaction can be, for example, triethanolamine, triisopropanolamine, N-methyl diethanolamine, N-ethyl diethanolamine, N-propyl diethanolamine, N-isopropyl diethanolamine, N-methyl diisopropanolamine, N-ethyl diisopropanolamine, N-propyl diisopropanolamine, N,N-dimethyl ethanolamine, N,N-dimethyl isopropanol amine and fatty dihydroxyalkylamine, in which the alkyl group can be lauryl, tetradecyl, esadecyl, stearyl, oleyl or mixtures thereof; preferably the alkanolam ines are triethanolamine, triisopropanolamine, N-methyl diethanolamine, N, N-dimethyl ethanolamine, N, N-dimethyl isopropanolamine and fatty dihydroxyalkylam ine; more preferably triethanolamine, triisopropanolamine, N-methyl diethanolamine, fatty dihydroxyalkylamine or mixtures thereof.

The epoxidized fatty acid esters can be glycols or polyglycols esterified with epoxidized unsaturated fatty acids, epoxidized vegetables oils or their mixtures; preferably the esters are epoxidized soy oil, epoxidized linseed oil, epoxidized rapeseed oil or epoxidized propylenglycol dioleate; more preferably epoxidized soy oil or epoxidized linseed oil.

Suitable basic catalysts for the preparation of the esters by trans-esterification can be chosen among alcoholates, hydroxides and carbonates of alkaline metals, such as sodium methylate, sodium ethylate, sodium propylate, sodium or potassium hydroxide, potassium, sodium or lithium carbonate. Sodium methylate, potassium hydroxide and potassium carbonate are the preferred basic catalysts.

The reaction of trans-esterification is carried out with or without solvent at temperature comprised between 50°C and 120°C. Preferably, the temperature is comprised between 80 and 110 °C, more preferably between 90 and 100 °C. The molar ratio between tertiary alkanolamines and starting esters of epoxidized fatty acids can be comprised between 10 and 1, preferably between 6 and 1.5, more preferably between 5 and 2. The percentage of catalyst on the mass of reagents can be comprised between 0.01 and 10%, preferably between 0.1 and 5%, more preferably between 0.5 and 1,5%.

The trans-esterification reaction does not give origin to a unitary product because of the intrinsic variability of the composition of vegetable oils and their epoxides depending also from the ratio alkanolamine/epoxidized oil. Moreover, the trans-esterification reaction releases polyalcohols that do not have necessarily to be separated (it is known, in fact, that the polyalcohols can contribute to the thermal stabilization of the PVC as reported, for example, WO/2005/019323). The product of the trans-esterification reaction can be purified by washing with water the reaction mass dissolved in an opportune solvent. Inorganic salts b) are known to the experts in the art. Examples of inorganic salts b) are salts of Li, Na, K, Mg, Ca, Sr, Ba, Zn, Al, and Ce. The inorganic salts can be added as such or in form of solution, in water or organic solvent or mixture of water and organic solvent; the preferred organic solvents are polyols, alcohol ethers, ester alcohols.

The preferred inorganic salt is a perchlorate salified with one of the above-mentioned cations, more preferably it is sodium or potassium perchlorate dissolved in 2-(2-butoxyethoxy) ethanol or glycols.

The organic phosphites are known as co-stabilizers of the chlorine containing polymers. Examples of organic phosphites that are suitable for the present invention are trialkyl phosphites, such as trioctyl, tridecyl, triisodecyl, tridodecyl, tristridecyl, triisotridecyl tripentadecyl, trioleyl, tristearyl, trilauryl, tricyclohexyl, triphenyl, tricresyl, trinonylphenyl, tris(2,4-tert-butylphenyl) phosphite. Other suitable phosphites are phosphite mixtures of aryl dialkyl or diaryl alkyl phosphites such as phenyl dioctyl, phenyl didecyl, phenyl diisodecyl, phenyl didodecyl, phenyl ditridecyl, phenyl diisotridecyl, phenyl ditetradecyl, phenyl dipentadecyl, diphenyl octyl, diphenyl decyl, diphenyl dodecyl, diphenyl tridecyl, diphenyl isotridecyl, diphenyl tetradecyl, diphenyl pentadecyl, diphenyl oleyl, diphenyl stearyl, bis(2,4-di-tert-butylphenyl) dodecyl phosphite. Also the phosphites of various diols and polyols can be profitably employed: tetraphenyldipropylene glycol diphosphite, polydipropylenglicol phenyl phosphite, tetraisodecyl dipropylene glycol diphosphite, tris-(dipropylene glycol) phosphite, tetra-methylolcyclohexanol decyl diphosphite, tetra-methylolcyclohexanol nonylphenyl diphosphite, bis(nonylphenyl) di(trimethylolpropane) diphosphite, bis(2-butoxyethyl) di(trimethylolpropane) diphosphite, tris(hydroxyethyl) isocyanurate hexadecyl triphosphite, didecyl pentaerythrityl diphosphite, distearyl pentaerythrityl diphosphite, bis(2,4-di-tert-butylphenyl) pentaerythrityl diphosphite. The preferred phosphites are trialkyl phosphites and in particular tris-tridecylphosphite, tris-isotridecylphosphite, tris-decylphosphite, tris-isodecylphosphite, with low content of phenol or free from phenol.

The thermally stabilized chlorine containing polymer of the invention can comprise other conventional additives or further stabilizers that are commonly used in the field. Examples of conventional additives or stabilizers of chlorine containing polymers are reported in "Handbook of PVC Formulating" E.J. Wickson, ed.; John Wiley & Sons, New York, 1993. Preferred conventional additives are anti-oxidants, co-stabilizers, glycidyl derivatives, other epoxy derivatives, metallic soaps, UV light absorbers and light stabilizers or mixtures thereof; particularly preferred are anti-oxidants, co-stabilizers, light stabilizers, such as sterically hindered amine (HALS), other epoxy derivatives; soaps containing alkaline-earth metals or Zn; or mixtures thereof.

Examples of anti-oxidants are alkylated phenols, for example 2,6-di-tert-butyl-4-methyl-phenol, pentaerythritol tetrakis(3-(3,5-di-tert-butyl-4-hydroxy phenyl) propionate) and octadecyl 3-(3,5-di-tert-butyl-4-hydroxyphenyl) propionate); alkylthiomethylphenols such as 2,4-dioctylthiomethyl-6-tert-butylphenol; alkylated hydroquinones, for example 2,6-di-tert-butyl-4-methoxyphenol; hydroxylated thiodiphenyl ethers such as 4,4 '- thiobis(2-tert-butyl-5-methylphenol); alkylidenebisphenols for example 2,2 '- methylenebis(6-tert-butyl-4-methylphenol); benzylic compounds for example 3,5,3',5'-tetratertbutyl-4,4'-dihydroxydibenzyl ether; hydroxybenzylated malonates, for example dioctadecyl 2,2-bis(3,5-di-tert-butyl-2-hydroxybenzyl) malonate; hydroxybenzyl aryl hydrocarbons such as 1,3,5-tris (3,5-di-tert-butyl-4-hydroxybenzyl)-2,4,6-trimethylbenzene; esters of beta (3,5-di-tert-butyl-4-hydroxyphenyl) propionic acid for example octadecyl 3-(3,5-ditert-butyl-4-hydroxyphenyl) propionate and pentaerythritol tetrakis (3-(3,5-di-tert-butyl-4-hydroxyphenyl) propionate); triazinic derivatives for example 2,4-bisoctylmercapto-6-(3,5-di-tert-butyl-4-hydroxyanilino)-1,3,5-triazine; phosphonates and phosphonites, for example dimethyl 2,5-di-tertbutyl-4-hydroxybenzylphosphonate; acyl aminophenols, for example 4-hydroxylauranilide; propionic acid derivatives, for example beta(5-tert-butyl-4-hydroxy-3-methylphenyl) propionic acid or beta(3,5-dicyclohexyl-4- hydroxyphenyl) propionic acid; esters of 3,5-di-tert-butyl-4- hydroxyphenyl acetic acid with mono- or poly-alcohols, amides of beta (3,5-di-tert-butyl-4- hydroxyphenyl) propionic acid, for example N,N'-bis(3,5-di-tert-butyl-4- hydroxyphenyl-propionyl) hexamethylendiamine; vitamin E (tocopherol) and derivatives; mixtures thereof. The anti-oxidants are normally added in amount comprised between 0.01 and 10 phr, preferably between 0.1 and 10 phr and more preferably between 0.1 and 5 phr.

Examples of suitable co-stabilizers are: compounds of the class of the beta-diketones, for example dibenzoylmethane, stearoylbenzoylmethane and octanoylbenzoyl methane; 4-pyranone derivative, for example 3-acetyl-2-hydroxy-6-methyl-4H-pyran-4-one; dihydropyridine derivatives, for example those described in EP 0 002 007, such as dilauryl dimethyldihydropyridine dicarboxylate, or the polydihydropyridine, described in EP 0 286 887, such as the esters of poly-1,4-dihydro-2,6-dimethyl pyridine-3,5-dicarboxylic acids; derivatives of the class of the uracils or aminopyridine-2,4-diones described in EP 0 768 336, such as N, N'-dimethyluracil; the co-stabilizers described in WO/2004/046236 and EP 1 174 461; mixtures thereof. Co-stabilizers are added in an amount comprised between 0.01 and 10 phr, preferably between 0.1 and 10 phr and more preferably between 0.1 and 5 phr.

The sterically hindered amines (HALS), and in particular the monomeric and polymeric piperidine derivatives, are used as light stabilizers and among those that can be used in the present invention we can mention the derivatives of tetramethyl piperidines, monomers and dimers, described in US 4,021,432 and US 4,049,647, such as bis(2,2,6,6-tetramethylpiperidine-4-yl) sebacate, bis(2,2,6,6-tetramethylpiperidine-4-yl) succinate, and their mixtures. Typically, the HALS are added in an amount comprised between 0.01 and 10, preferbaly between 0.1 and 10 and more preferably between 0.1 and 5 phr.

The glycidyl derivatives can contain one, two, three or more glycidyl groups. Compounds having two functional groups are preferred, in particular the diglycidyl compounds containing aromatic groups. The amount of glycidyl derivatives normally used is comprised between 0.1 and 50, preferably between 1 and 30 and more preferably between 1 and 25 phr.

The stabilizers composition of the invention can favorably further contain epoxy derivatives. The preferred compounds are epoxidized natural fatty acid esters for example epoxidized soy oil, epoxidized linseed oil and epoxidized rapeseed oil. It is also possible to use synthetic products, for example epoxidized butyl oleate, epoxidized polybutadiene, the glycidyl ester of neodecanoic acid.

The amount of epoxy derivatives normally used is comprised between 0.1 and 50, preferably between 1 and 30 and more preferably between 1 and 25 phr.

Additional stabilizers can be metal soaps, mainly salts of fatty carboxylic acids, for example oleic, lauric, stearic acid, but also salts of aromatic or aliphatic carboxylic acids with relatively short alkyl chain for example acetic, propionic, butyric, valeric, hexanoic, octanoic, 2-ethylhexanoic, benzoic, salicylic, toluic (orto, meta and para) acid, or also salts of polycarboxylic acids, for example oxalic, malonic, succinic, glutaric, adipic, fumaric, phthalic, citric, trimellitic, pyromellitic acid. The metal cations are mainly Li, Na, K, Mg, Ca, Sr, Ba, Zn, Al, Ce and rare-earths or mixtures thereof. They are mainly used as synergic mixtures, such as Ba/Zn, Mg/Zn, Ca/Zn, Ca/Mg/Zn soaps. A description of metal soaps commonly employed can be found in "Ullmann's Encydopedia of Industrial Chemistry, 5th Ed., Vol. A16 (1985), pp. 361 et seq. The metal soaps or their mixtures can be used in an amount comprised between 0.001 and 10 phr, preferably between 0.01 and 8 phr and more preferably between 0.05 and 5phr.

In a particularly preferred embodiment, the thermally stabilized chlorine containing polymer comprises co-stabilizers of beta diketonic type and/or anti-oxidants such as sterically hindered phenols. In particular, considering the beta diketonic derivatives, the most preferred compounds are dibenzoylmethane and stearoylbenzoylmethane; the most preferred sterically hindered phenols are pentaerythritol tetrakis(3-(3,5-di-tert-butyl-4-hydroxyphenyl) propionate) and octadecyl 3-(3,5-ditert-butyl-4-hydroxyphenyl) propionate. The preferred dosages are comprised between 0.1 and 5.0 phr.

Further additives can primary be plasticizing products, for example phthalates, adipates, trimellitates, polymeric plasticizer, acetyltributylcitrates, sebacates, azelates, alone or optionally in mixture with secondary plasticizers, such as chloroparaffins.

Moreover, products with anti-flame activity can be present, for example phosphoric esters, such as triaryl phosphates, alkylaryl phosphates, trialkyl phosphates.

Other additives that can be present are lubricants, for example paraffins or ester derivatives of glycerol (glycerol monostearate, glycerol monooleate, etc), fillers, organic or inorganic pigments, viscosity or rheology modifiers, antifogging agents, antistatic agents and mixture thereof.

Preferably, the process for thermally stabilizing a chlorine containing polymer comprises dispersing in said chlorine containing polymer:
a) from 0. 5 to 2.0 phr of an ester of epoxidized fatty acids and tertiary alkanolam ines;
b) from 0.01 to 0.5 phr of an inorganic salt chosen among perchlorate, hexafluorophosphate, hexafluoroantimonate, tetrafluoroborate, trifluoroacetate, trifluoromethanesulfonate (triflate), phosphotungstate and mixtures thereof;
c) from 0.01 to 5.0 phr of an organic phosphite.

Examples of chlorine containing polymers that can be stabilized according to the process of the invention are polymers derived from vinyl chloride (PVC) and/or from vinylidene chloride; vinyl resin containing vinyl chloride units in their structure, such as co-polymer of vinyl chloride and vinyl esters of aliphatic acid, in particular vinyl acetate; co-polymer of vinyl chloride with esters of acrylic and methacrylic acid and acrylonitrile; co-polymer of vinyl chloride with dienes and unsaturated dicarboxylic acids or their anhydrides, such as vinyl chloride with diethylmaleate, diethylfumarate or maleic anhydride; chlorinated polymers obtained by chlorination after the polymerization; co-polymer of vinyl chloride or vinylidene chloride with unsaturated aldehydes and/or ketones such as acrolein, crotonaldehyde, vinylmethyl ketone, vinylmethyl ether, vinylisobutyl ketone and similar products; polymers of vinyl chloroacetate and dichlorovinyl ether; chlorinated polymers of vinyl acetate; chlorinated polymers of the esters of acrylic acid and/or alpha-replaced acrylic acids; chlorinated styrene polymers like dichlorostyrene; chlorinated ethylene polymers; post-chlorinated chlorobutadiene polymers and co-polymer with vinyl chloride; chlorinated natural and synthetic rubbers; mixtures of the above mentioned polymers, also with other polymerizable compounds. Within this invention, PVC also indicates co-polymers of vinyl chloride with other polymerizable compounds such as acrylonitrile, vinylacetate or ABS. These polymers can be in suspension, emulsion or mass.

The homopolymers of PVC, also in combination with polyacrylates or polymethacrylates and the crosslinked polymers of PVC with EVA, ABS, MBS and PMMA are the preferred chlorine containing polymers. Preferred chlorine containing polymers are also the mixtures of the above homopolymers or crosslinked polymers with other thermoplastic polymers or elastomers, in particular mixtures with ABS, MBS, NBR, SAN, NAR, EVA, CPE, MBAS, PMA, PMMA, EPDM and polylactones, more in particular with ABS (acrylonitrile-butadiene - styrene), NBR (acrylonitrile-butadiene), NAR (acrylonitrile-acrylate), SAN (styrene-acrylonitrile) and EVA (ethylene-vinylacetate). Particularly preferred are also the mixtures with co-polymer styrene-acrylonitrile based on acrylates (ASA). The mixtures of polymers that contain between 25 and 75% of PVC and between 75 and 25% by weight of the mentioned of co-polymer are the most preferred.

Moreover, the process of the present invention can favorably be used for the above described chlorine containing polymers that must be recycled, that is for the polymers that have been already worked, used and stocked, in particular for recycled PVC.

The preferred applications of the process of the present invention are those involving flexible PVC and semi-rigid PVC.

The stabilizing components of the present invention and the other additives, if necessary, can directly be added to the single components or to the mixture of polymers in the process equipments, for example in the calenders, mixers, kneaders and extruders.

The stabilizing components can singularly be added or can be added as a mixture in the opportune form, for example as solutions, emulsions, dispersions or pastes.

Further objects of the invention are the manufactured articles comprising a chlorine containing polymer which has been thermally stabilized by the process of the invention, for example covering for wires, cable insulation, coating films, sheeting for agriculture, material for floors, wall papers, flexible films, plastic components for automobiles, synthetic leather, fabric coating, spool protection.

### Exam ples

### Preparation of the esters of epoxidized fatty acids and tertiary alkanolamines

Example 1: Trans-esterification of triethanolamine and epoxidized soy oil catalyzed with sodium methylate.

150.61 g (157 mmoles) of epoxidized soy oil (MW 960, oxirane oxygen about 6.5%) and 67.70 g (454 mmoles) of triethanolamine (MW 149) are loaded in a suitable flask equipped with condenser together with 2.17 g of sodium methylate. The reaction mixture is heated at 100°C under nitrogen atmosphere. After approximately 15 min the reaction mass becomes homogenous and the reaction ends approximately after 5 hours, providing about 220 g of mixture (Ester 1A), characterized by the following spectral data:
IR cm⁻¹: 3390 (s) ν_{OH}; 2926 e 2856 (s) ν_{CH2} ; 1736 (s) ν_{C=O} ; 1246, 1168, 1076 and 1040 (ms) ν_{C-O-C}.

Ester 1A is then purified as follows:
110 g of Ester 1A are dissolved in 250 ml of ethyl acetate and washed with 150 ml of brine. The organic phase is separated and distilled under vacuum providing 89.1 g of purified product (Esters 1 B), characterized by the following spectral data:
   IR cm⁻¹: 3436 (m) ν_{OH} ; 2926 e 2855 (s) v _{CH2} ; 1737 (s) ν_{C=O} ; 1239, 1711 e 1044 (ms) ν_{C-O-C}
   ¹H-NMR [CDCl₃] δ ppm: 4,05-4,20 m (5,5 H); 3,55- 3,60 m (4 H); 2,85-3,15 c.a. (7.5 H); 2,80 m (5.5 H); 2,7 m (4 H); 2,25-2,35 c.a. (6 H); 1,15-1,80 c.a. (74 H); 0,80-0,90 c.a. (9 H)
   LC-MS[m+1]⁺: 444; 724; 738; 873; 887; 1022; 1036.

The ¹H-NMR and LC-MS spectra are compatible with a mixture containing mainly : monoester of triethanolamine with diepoxidized linoleic acid; diester of triethanolamine with epoxidized oleic acid and diepoxidized linoleic acid; diester of triethanolamine with two diepoxidized linoleic acids; diester of triethanolamine with epoxidized oleic acid and diepoxidized linoleic acid in which a triethanolamine molecule is bonded on an epoxide group; diester of the triethanolamine with diepoxidized linoleic acid in which a triethanolamine molecule is bonded on an epoxide; diester of the triethanolamine with epoxidized oleic acid and diepoxidized linoleic acid in which two molecules of triethanolamine are bonded on two epoxides; diester of the triethanolamine with diepoxidized linoleic acid in which two molecules of triethanolamine are bonded on two epoxides.

Example 2: Trans-esterification of triethanolamine and epoxidized soy oil catalyzed with KOH.

The procedure is the same as in Example 1, but it uses 1006.5 g (1.05 moles) of epoxidized soy oil (oxirane oxygen about 6.5%), 450.0 g (3.02 moles) of triethanolamine and 9.7 g of KOH. 1450 g of product (Ester 2A) are obtained, characterized by the following spectral data:
IR cm⁻¹: 3390 (s) ν_{OH} ; 2924 e 2855 (s) ν_{CH2}; 1736 (s) ν_{C=O}; 1246, 1168, 1075 e 1039 (m s) ν_{C-O-C}

Ester 2A is purified as in Example 1, dissolving 100 g of product in 250 ml of ethyl acetate and washing with 100 ml of brine. The organic phase is distilled under vacuum providing 75.5 g of purified product (Ester 2B), characterized by the following spectral data:
IR cm⁻¹: 3437 (s) ν_{OH}; 2924 e 2856 (s) vs _{CH2} ; 1736 (s) ν_{C=O}; 1 243, 1170 e 1044 (ms) ν_{C-O-C}
¹H-NMR [CDCl₃] δ ppm: 4,05-4,20 m (7 H); 3,55- 3,60 m (3,5 H); 2,85-3,15 c.a. (7 H); 2,80 m (7 H); 2,7 m (3,5 H); 2,25-2,35 c.a. (6 H); 1,15-1,80 c.a. (74 H); 0,80-0,90 c.a. (9 H)
LC-MS[m+1]⁺: 444; 724; 738; 887

The ¹H-NMR and LC-MS spectra are compatible with a mixture containing mainly: monoester of triethanolamine with diepoxidized linoleic acid; diester of triethanolamine with epoxidized oleic acid and diepoxidized linoleic acid; diester of triethanolamine with two diepoxidized linoleic acids; diester of triethanolamine with diepoxidized linoleic acid in which a triethanolamine molecule is bonded on an epoxide group.

Example 3: Trans-esterification of triethanolamine and epoxidized soy oil catalyzed with K₂CO₃

The procedure is the same as in Example 1, but it uses 100.11 g (104 mmoles) of epoxidized soy oil (oxirane oxygen about 6.5%), 44.70 g (300 mmoles) of triethanolamine and 1.45 g of K₂CO₃. 144 g of product are obtained (Ester 3A), characterized by the following spectral data:
IR cm⁻¹: 3392 (s)ν_{OH}; 2926 e 2855 (s) ν_{CH2} ; 1736 (s) ν_{C=O} ; 1246, 1169, 1075 e 1040 (ms) ν _{C-O-C}

Ester 3A is purified as in Example 1, by dissolving 60 g of product in 250 ml of ethyl acetate and washing with 150 ml of brine. The organic phase is distilled under obtaining 48,6 g of purified product (Ester 3B), characterized by the following spectral data:
IR cm⁻¹: 3449 (m)ν_{OH}; 2926 e 2855 (s) ν_{CH2} ; 1736 (s) ν_{C=O} ; 1241, 1170 e 1045 (ms) ν_{C-O-C}
¹H-NMR [CDCl₃] δ ppm: 4,05-4,20 m (7 H); 3,55- 3,60 m (4 H); 2,85-3,15 c.a. (8 H); 2,80 m (7 H); 2,7 m (4 H); 2,25-2,35 c.a. (6 H); 1,15-1,80 c.a. (74 H); 0,80-0,90 c.a. (9 H)
LC-MS[m+1]⁺: 444; 724; 738; 887; 1036.

The ¹H-NMR and LC-MS spectra are compatible with a mixture containing mainly: monoester of triethanolamine with diepoxidized linoleic acid; diester of triethanolamine with epoxidized oleic acid and diepoxidized linoleic acid; diester of triethanolamine with diepoxidized linoleic acid. Smaller amounts of diester of triethanolamine with diepoxidized linoleic acid in which a triethanolamine molecule is bonded on an epoxide group and of diester of triethanolamine with diepoxidized linoleic acid in which two molecules of triethanolamine are bonded on two epoxides are present.

Example 4: Trans-esterification of N-methyldiethanolamine and epoxidized soy oil catalyzed with sodium methylate.

The procedure is the same as in Example 1, but it uses 169.0 g (176 mmoles) of epoxidized soy oil (oxirane oxygen about 6.5%), 61.1 g (513 mmoles) of N-methyldiethanolamine (MW 119) and 2.28 g of NaOMe. 230 g of product are obtained (Ester 4A), characterized by the following spectral data:
IR cm⁻¹: 3391 (s) ν_{OH}; 2927 e 2855 (s) ν_{CH2} ; 1736 (s) ν_{C=O} ; 1245, 1171, 1082, 1038 (ms) ν_{C-O-C}

Ester 4A is purified as in Example 1 by dissolving 100 g of product with 300 ml of ethyl acetate and washing with 200 ml of brine. The organic phase is distilled under vacuum providing 58 g of purified product (Ester 4B), characterized by the following spectral data:
IRcm⁻¹: 3462 (m) ν_{OH}; 2926 e 2855 (s) νs_{CH2}; 1738 (s) ν_{C=O}; 1241, 1171 e 1044 (ms) ν_{C-O-C}
¹H-NMR [CDCl₃] δ ppm: 4,15-4,20 m (5,6 H); 3,55- 2,4 m (1,5 H); 2,85-3,15 c.a. (9,8 H); 2,70 m (5,3 H); 2,6 m (2,4 H); 2,25-2,35 c.a. (12 H); 1,15-1,80 c.a. (74 H); 0,80-0,90 c.a. (9 H)
LC-MS[m+1]⁺: 414; 694; 708; 813; 827;

The ¹H-NMR and LC-MS spectra are compatible with a mixture containing mainly: monoester of the N-methyldiethanolamine with diepoxidized linoleic acid; diester of N-methyldiethanolamine with epoxidized oleic acid and diepoxidized linoleic acid; diester of N-methyldiethanolamine with diepoxidized linoleic acid; diester of the N-methyldiethanolamine with epoxidized oleic acid and diepoxidized linoleic acid in which a N-methyldiethanolamine molecule is bonded on an epoxide; diester of a N-methyldiethanolamine molecule with diepoxidized linoleic acid in which a N-methyldiethanolamine molecule is bonded on an epoxide.

Example 5: Trans-esterification of triisopropanolamine and epoxidized soy oil catalyzed with sodium methylate.

The procedure is the same as in Example 1, but uses 100.0 g (104 mmoles) of epoxidized soy oil (oxirane oxygen about 6.5%), 57.39 g (300 mmoles) of triisopropanolamine (MW 191) and 1.57 g of NaOMe. 158 g of product are obtained (Ester 5A), characterized by the following spectral data:
IR cm⁻¹: 3400 (s) ν_{OH};2927 e 2855 (s) ν_{CH2} ; 1732 (s) ν_{C=O} ; 1275, 1179, 1136 e 1066 (m s) ν_{C-O-C}

Ester 5A is purified as in Example 1 by dissolving 50 g of product with 150 ml of ethyl acetate and washing with 100 ml of brine. The organic phase is distilled under vacuum providing 25 g of purified product (Ester 5B), characterized by the following spectral data:
IRcm⁻¹: 3449 (m) ν_{OH}; 2928 e 2855 (s) ν_{CH2} ; 1735 (s) ν_{C=O} ; 1243, 1180,
1133e 1055 (ms)ν_{C-O-C}
¹H-NMR [CDCl₃] δ ppm: 4,05-4,20 m (2H); 3,65-3,85 m (4,5H); 2,85-3,20 c.a. (7 H); 2,30-2,80 m (12,5H); 2,20-2,30 m (6,5H); 1,00-1,85 c.a. (90 H); 0,80-0,95 m (9 H)
LC-MS[m+1]⁺: 472; 486; 752; 766; 780; 971

The ¹H-NMR and LC-MS spectra are compatible with a mixture containing mainly: monoester of the triisopropanolamine with epoxidized oleic acid or diepoxidized linoleic acid; diester of triisopropanolamine with two epoxidized oleic acids or two diepoxidized linoleic acids; diester of triisopropanolamine with diepoxidized linoleic acid and epoxidized oleic acid. The product contain also a smaller amount of diester of triisopropanolamine with diepoxidized linoleic acid in which a molecule of triisopropanolamine is bonded on an epoxide group.

Example 6: Trans-esterification of triethanolamine and epoxidized linseed oil catalyzed with sodium methylate.

The procedure is the same as in Example 1, but uses 48.30 g (50 mmoles) of epoxidized linseed oil (MW 974, oxirane oxygen about 9%), 22.35 g (150 mmoles) of triethanolamine and 0.70 g of NaOMe. 70 g of product are obtained (Ester 6A) characterized by the following spectral data:
IR cm⁻¹: 3392 (s) v_{OH}; 2927 e 2855 (s) v _{CH2} ; 1735 (s) v_{C=O} ; 1246, 1169, 1076 e 1045 (m s) ν_{C-O-C}

Ester 6A is purified as in Example 1 by dissolving 35 g of product in 100 ml of ethyl acetate and washing with 70 ml of brine. The organic phase is distilled under vacuum providing the purified product (Ester 6B) characterized by the following spectral data:
IR cm⁻¹: 3448 (m) v_{OH}; 2927 e 2855 (s) v _{CH2} ; 1735 (s) v_{C=O} ; 1240, 1171e 1045 (m s) ν _{C-O-C}
¹H-NMR [CDCl₃] δ ppm: 4,05-4,20 m (8H); 3,65-3,85 m (4,5H); 2,85-3,20 c.a. (6,5 H); 2,75-2,85 m (8H); 2,65-2,75 m (4,5 H); 2,20-2,35 m (6 H); 1,15-1,85 (64 H); 0,75-1,10 m (9 H)
LC-MS [m+1]⁺: 430; 444; 458; 607; 727; 738; 752; 873; 887; 1036; 1064; 1213.

The ¹H-NMR and LC-MS spectra are compatible with a mixture containing mainly: monoester of triethanolamine with epoxidized oleic acid or diepoxidized linoleic acid or triepoxidized linolenic acid; monoester of triethanolamine with triepoxidized linolenic acid in which a molecule of triisopropanolamine is bonded on an epoxide group; diester of triethanolamine with epoxidized oleic acid and diepoxidized linoleic acid; diester of triethanolamine with diepoxidized linoleic acid (or diester of triethanolamine with epoxidized oleic acid and triepoxidized linolenic acid); diester of triethanolamine with diepoxidized linoleic acid and triepoxidized linolenic acid; diester of triethanolamine with epoxidized oleic acid and diepoxidized linoleic acid in which a molecule of triisopropanolamine is bonded on an epoxide; diester of triethanolamine with diepoxidized linoleic acid in which a molecule of triisopropanolamine is bonded on an epoxide; diester of triethanolamine with diepoxidized linoleic acid in which two molecules of triethanolamine are bonded on two epoxides; diester of triethanolamine with triepoxidized linolenic acid in which two molecules of triethanolamine are bonded on two epoxides; diester of triethanolamine with triepoxidized linolenic acid in which three molecules of triethanolamine are bonded on three epoxides.

### Applicative evaluation of the mixtures of stabilizers of the invention

The performances of the stabilizer compositions of the invention were estimated in the following chlorine containing polymer:
Chlorine containing polymeric matrix (PVC): Vestolit P 1430/Lacovyl PS 1030/Lacovyl PB 1702 (60/20/20)
Plasticizer: Diisononylphthalate (DINP), 36 phr
Plasticizer: Benzoflex 2088, 10 phr

The compositions of the invention were compared with known stabilizer compositions: a) a mixture of epoxidized soy oil (ESBO), NaClO4 and organic phosphite (tris-isotridecylphosphite), b) a mixture of a commercial organic stabilizer free from metals and tris-isotridecylphosphite, c) a typical Ca/Zn stabilizer containing a organic phosphite. The stabilizer compositions were prepared employing the components shown in Table 1.

**Table 1**

| Component | MIX 1 | MIX 2 | MIX 3 | MIX 4 | MIX 5 | MIX 6 | MIX 7* | MIX 8* | MIX 9* |
|---|---|---|---|---|---|---|---|---|---|
| Ester 1A (phr) | 0.8 | | | | | | | | |
| Ester 2A (phr) | | 0.8 | | | | | | | |
| Ester 2B (phr) | | | 0.8 | | | | | | |
| Ester 4A (phr) | | | | 0.8 | | | | | |
| Ester 5A (phr) | | | | | 0.8 | | | | |
| Ester 6A (phr) | | | | | | 0.8 | | | |
| ESBO (phr) (Oxirane oxygen about 6.5%) | | | | | | | 0.8 | | |
| Tris-isotridecylphosphite (phr) | 2 | 2 | 2 | 2 | 2 | 2 | 2 | 2 | |
| NaClO₄ **(phr) | 0.12 | 0.12 | 0.12 | 0.12 | 0.12 | 0.12 | 0.12 | | |
| Organic Stabilizer (phr) | | | | | | | | 0.8 | |
| Ca/Zn Stabilizer (phr) | | | | | | | | | 2 |

| | | | | | | | | | |
|---|---|---|---|---|---|---|---|---|---|
| * Comparative ** added as 60% aqueous solution | | | | | | | | | |

### Test of static thermal stability

The formulated polymer and compositions MIX 1 - MIX 9 described in the previous paragraph were mixed in a mixer with two cylinders (two cylinders calender Battaggion, 25 rpm) for 1 min at 165 °C. 30 cm long strips obtained from the sample films, with thickness of 0.5 mm, were heated at 190 °C in a oven (Werner-Mathis-Thermo).

The thermal stability over time was determined as Yellow Index (YI) according to the standard method ASTM D2244 at intervals of 2 min using a colorimeter BYK Spectro-Guide Sphere.

Low values of Yellow Index indicate a good stabilization. The results are reported in Table 2.

**Table 2**

| Time (min) | MIX 1 | MIX 2 | MIX 3 | MIX 4 | MIX 5 | MIX 6 | MIX 7* | MIX 8* | MIX 9* |
|---|---|---|---|---|---|---|---|---|---|
| 2 | -1.34 | -1.31 | -1.79 | -1.43 | -1.22 | -0.73 | -1.30 | -0.62 | 0.65 |
| 4 | 0.22 | -0.88 | -0.25 | 1.06 | -0.06 | 0.63 | -0.77 | 0.28 | 0.76 |
| 6 | 4.21 | -0.31 | -0.12 | 6.61 | 6.03 | 4.59 | 2.33 | 3.76 | 0.90 |
| 8 | 10.38 | 0.32 | 1.93 | 12.43 | 12.16 | 10.65 | 7.88 | 8.73 | 1.16 |
| 10 | 18.27 | 2.05 | 4.93 | 17.85 | 17.43 | 20.01 | 11.83 | 16.75 | 2.15 |
| 12 | 25.78 | 4.78 | 12.37 | 23.90 | 23.73 | 28.85 | 22.02 | 26.41 | 5.05 |
| 14 | 30.57 | 11.72 | 18.77 | 28.82 | 30.15 | 38.34 | 41.62 | 38.23 | 23.53 |
| 16 | 37.73 | 19.09 | 24.96 | 37.57 | 44.15 | 44.69 | 67.95 | 48.36 | 54.56 |
| 18 | 44.13 | 26.50 | 34.38 | 51.04 | 64.48 | 51.18 | 83.88 | 57.69 | 70.11 |
| 20 | 52.88 | 33.56 | 50.34 | 65.74 | 85.41 | 56.70 | 97.15 | 65.34 | 83.72 |

| | | | | | | | | | |
|---|---|---|---|---|---|---|---|---|---|
| * Comparative | | | | | | | | | |

From the obtained data it is clear that the use of products of trans-esterification of epoxidized fatty acid esters and tertiary alkanolam ines in combination with a perchlorate salt and an organic phosphite leads to a substantial stabilization of the formulated chlorine containing polymer. The product purified with the procedure described in the present invention (MIX 3), even if it has a stabilizing performance slightly lower than the crude reaction product (MIX 2), shows however a good stabilizing capacity. In any case the stabilizer compositions of the invention are clearly more effective than the composition containing epoxidized soy oil, sodium perchlorate and phosphite (MIX 7). It must be pointed out that stabilizers containing the products of trans-esterification of epoxidized fatty acid esters and tertiary alkanolamines in combination with NaClO₄ and phosphite give a superior thermal stabilization of the PVC than the commercial stabilizer free from metals (MIX 8) and the commercial Ca/Zn stabilizer (MIX 9). In particular MIX 2 is the mixture which shows the highest performance as color retention and long term thermal stability.

Test of thermal stability on spreading

The stabilizers compositions MIX 2 and MIX 7 were mixed with the described formulated polymer using a turbomixer Molteni at a speed of about 400 rpm for 5 min at room temperature under vacuum. The plastisols obtained were spread obtaining films with a thickness of 0.5 mm which were exposed to different residence time at 190°C in an oven (Werner-Mathis-Thermo). The thermal stability over time was determined like Yellow Index (YI) according to the standard method ASTM D2244 using a colorimeter BYK Spectro-Guide Sphere at the time intervals shown in Table 3. Low values of Yellow Index indicate a good stabilization. The result are reported in Table 3.

**Table 3**

| **Time (min)** | **MIX 2** | **MIX 7*** |
|---|---|---|
| 2 | -2.31 | -1.94 |
| 4 | -0.94 | -0.41 |
| 6 | 0.06 | 3.06 |
| 8 | 3.32 | 10.12 |
| 10 | 9.82 | 24.35 |
| 15 | 25.51 | 55.28 |

| | | |
|---|---|---|
| *Comparative | | |

It is clear that the use of the stabilizer composition of the invention brings to a substantial stabilization of the plastisol of the formulated chlorine containing polymer and that it is more effective than the composition containing epoxidized soy oil, sodium perchlorate and phosphite.

### Test of static thermal stability

The stabilizer composition MIX 2 was compared with the same composition modified with the addition of a co-stabilizers and an anti-oxidant (the amounts are shown in Table 4). The stabilizers were mixed with the chlorine containing formulated polymer described above, using a mixer with two cylinders for 1 min at 165 °C. Strips obtained from the sample films, with thickness of 0.5 mm, were heated at 190 °C in a oven (Werner-Mathis-Thermo). Yellow Index (YI) was determined according to the standard method ASTM D2244 at intervals of 2 min using a colorimeter BYK Spectro-Guide Sphere. The results are reported in Table 4.

**Table 4**

| **Additive** | **MIX 2** | **MIX 10** |
|---|---|---|
| Co-stabilizer A (beta - diketone) | 0 phr | 0,3 phr |
| Anti-oxidant B (ster. hindered phenol) | 0 phr | 0,3 phr |
| | | |
| **Time (min)** | **YI** | **YI** |
| 2 | -1.31 | -1.47 |
| 4 | -0.88 | -0.76 |
| 6 | -0.31 | -0.59 |
| 8 | 0.32 | -0.08 |
| 10 | 2.05 | 1.05 |
| 12 | 4.78 | 2.24 |
| 14 | 11.72 | 4.14 |
| 16 | 19.09 | 6.52 |
| 18 | 26.50 | 10.37 |
| 20 | 33.56 | 17.16 |

| | | |
|---|---|---|
| Co-stabilizer A: stearoylbenzoylmetHanE Anti-oxidant B: octadecyl 3-(3,5-of-tert-butyl-4-hydroxyphenyl)propionate | | |

It can be seen that the addition of a co-stabilizers of and an anti-oxidant to the composition of the invention improves the thermal stabilization of the formulated chlorine containing polymer.

## Claims

1. Thermally stabilized chlorine containing polymer comprising:
a) from 0.2 to 3.0 parts by weight based on 100 parts by weight of chlorine containing polymer (phr) of an ester of epoxidized fatty acids and tertiary alkanolam ines;
b) from 0.01 to 5.0 phr of an inorganic salt chosen among perchlorate, hexafluorophosphate, hexafluoroantimonate, tetrafluoroborate, trifluoroacetate, trifluoromethanesulfonate (triflate), phosphotungstate and mixtures thereof;
c) from 0.01 to 10 phr of an organic phosphite.

2. The thermally stabilized chlorine containing polymer according to Claim 1) comprising:
a) from 0.5 to 2.0 phr of an ester of epoxidized fatty acids and tertiary alkanolamines;
b) from 0.01 to 0.5 phr of an inorganic salt chosen among perchlorate, hexafluorophosphate, hexafluoroantimonate, tetrafluoborate, trifluoroacetate, trifluoromethanesulfonate (triflate), phosphotungstate and mixtures thereof;
c) from 0.01 to 5.0 phr of an organic phosphite.

3. The thermally stabilized chlorine containing polymer according to Claim 1) in which said epoxidized fatty acid esters with alkanolamines a) are obtained by trans-esterification from esters chosen among epoxidized soy oil, epoxidized linseed oil, epoxidized rapeseed oil, epoxidized propilenglicol dioleate or mixtures thereof and from tertiary alkanolamines chosen in the group that consists of triethanolamine, triisopropanolamine, N-methyl diethanolamine, N,N-dimethyl ethanolamine, N,N-dimethyl isopropanol amine and fatty dihydroxyalkylam ine and mixtures thereof.

4. The thermally stabilized chlorine containing polymer according to Claim 3) in which said epoxidized fatty acid esters with alkanolam ines are obtained through trans-esterification from epoxidized oil of soya, epoxidized linseed oil or mixtures thereof and from triethanolamine, or triisopropanolamine, N-methyl diethanolamine, fatty dihydroxyalkylamine or mixtures thereof.

5. The thermally stabilized chlorine containing polymer according to Claim 1) in which said inorganic salt b) is a perchlorate of Li, Na, K, Mg, Ca, Sr, Ba, Zn, Al, or Ce.

6. The thermally stabilized chlorine containing polymer according to Claim 1) in which the organic phosphite c) is chosen in the group that consists of trialkyl phosphites, aryl dialkyl phosphites, diaryl alkyl phosphites, phosphites of di- and poly-ols, and mixtures thereof.

7. The thermally stabilized chlorine containing polymer according to Claim 1) further comprising from 0.1 to 5 phr of beta-diketone and/or sterically hindered phenol compounds.

8. Process for thermally stabilizing a chlorine containing polymer comprising dispersing in said chlorine containing polymer:
a) from 0.2 to 3.0 phr of an ester of epoxidized fatty acids and tertiary alkanolamines;
b) from 0.01 to 5.0 phr of an inorganic salt chosen among perchlorate, hexafluorophosphate, hexafluoroantimonate, tetrafluoborate, trifluoroacetate, trifluoromethanesulfonate (triflate), phosphotungstate and mixtures thereof;
c) from 0.01 to 10 phr of an organic phosphite.

9. The process for thermally stabilizing a chlorine containing polymer according to Claim 8) that comprises dispersing in said chlorine containing polymer:
a) from 0. 5 to 2.0 phr of an ester of epoxidized fatty acids and tertiary alkanolam ines;
b) from 0.01 to 0.5 phr of an inorganic salt chosen among perchlorate, hexafluorophosphate, hexafluoroantimonate, tetrafluoroborate, trifluoroacetate, trifluoromethanesulfonate (triflate), phosphotungstate and mixtures thereof;
c) from 0.01 to 5.0 phr of an organic phosphite.

10. The process for thermally stabilizing a chlorine containing polymer according to Claim 8) that comprises dispersing in said polymer from 0.1 to 5.0 phr of beta-diketone and/or sterically hindered phenol compounds.

11. The process for thermally stabilizing a chlorine containing polymer according to Claim 8) in which said chlorine containing polymer is a polym er based on PVC.

12. Manufactured articles comprising a chlorine containing polymer thermally stabilized according to the process of Claims 8).

## Patentansprüche

1. Thermisch stabilisiertes und Polymer enthaltendes Chlor mit:
a) von 0,2 bis 3,0 Gewichtsanteilen basierend auf 100 Gewichtsanteilen Chlor mit Polzmergehalt (phr) eines Esters epoxidierter Fettsäuren und tertiärer Alkanoiamine;
b) von 0,01 bis 5,0 phr eines anorganischen Salzes, das gewählt wurde unter Perchioraten, Hexafiuorphosphaten, Hexafluorantimonaten, Tetrafluorboraten, Trifluorazetaten, Trifluormethanesulfonaten (Triflate), Phosphorwolframaten und deren Gemischen;
c) von 0,01 bis 10 phr eines anorganischen Phosphites.

2. Das thermisch stabilisierte und ein Polymert gemäß Patentanspruch 1) enthaltende Chlor mit:
a) von 0,5 bis 2,0 phr eines Exters epoxidierter Fettsäuren und tertiärer Alkanolamine;
b) von 0,01 bis 0,5 phr eines anorganischen Salzes, das gewählt wurde unter Perchioraten, Hexafiuorphosphaten, Hexafluorantimonaten, Tetrafluorboraten, Trifluorazetaten, Trifluormethanesulfonaten (Triflate), Phosphorwolframtaen und deren Gemischen;
c) von 0,01 bis 5,0 phr eines anorganischen Phosphites.

3. Das thermisch stabilisierte und ein Polymer enthaltende Chlor gemäß Patentanspruch 1), in dem die genannten epoxidierten Fettsäure-Ester mit Aikanoiaminen a) durch eine Umesterung aus unter epoxidiertem Sojaöl, epoxidiertem Leinöl, epoxidiertem Rapsöl, epoxidiertem Propylenglykoldioleat oder Gemischen daraus sowie aus der Trielhanolamine, Triisopropanolamine, N-Melhyldiethanolamine, N, N-Diniethylethanolarnine, N, N-Dimethylisopropanolamine und Fett-Dihydroxyalkylamine sowie deren Gemische enthaltenden Gruppe gewählten tertiären Alkanoiaminen gewählt wurden, erzielt werden.

4. Das thermisch stabilisierte und Polymert enthaltende Chlor gemäß Patentanspruch 3), bei dem die genannten epoxidierten Fettsäureester mit Alkanolaminen durch Umesterung aus epoxidierten Sojaöl.eèpoxidiertem Leinöl oder deren Gemischen sowie als Triethanolaminen erzielt werden.
Or Triisopropanolamine,N-Methyl-Diethanolamine, Fett-Dihydroxyalkylamine oder deren Gemische.

5. Das thermisch stabilisierte und Polymer enthaltende Chlor gemäß Patentanspruch 1), bei dem das genannte anorganische Salz b) ein Perchlorat von Li, Na, K, Mg, Ca, Sr, Ba, Zn, Al, oder Ce ist.

6. Das thermisch stabilisierte und Polymer enthaltende Chlor gemäß Patentanspruch 1), bei dem das organische Phosphat c) aus der Gruppe gewählt wurde, die Trialkylphosphite, Aryldialkylphosphite, Diarylalkylphosphites, Phosphite von Di- und Poly-Öle sowie deren Gemische umfasst.

7. Das thermisch stabilisierte und Polymer enthaltende Chlor gemäß Patentanspruch 1), das außerdem von 0,1 bis 5 phr Beta-Diketon und/oder sterisch behinderte Phenolverbindungen enthält.

8. Prozess zur thermischen Stabilisierung eines Polymer enthaltenden Chlors, das im genannten, das Polymer enthaltenden Chlor dispergiert ist:
a)von 0,2 bis 3,0 phr eines Esters epoxidierter Fettsäuren und tertiärer Alkanolamine;
b)von 0,01 bis 5,0 phr eines anorganischen Salzes, das gewählt wurde unter Perchloraten, Hexafluorphosphaten, Hexafluorantimonaten, Telrafluorboralen, Trifluorazetaten, Trifluormethansulfonaten (Triflate), Phosphorwolframate und deren Gemische;
c) von 0,01 bis 10 phr eines anorganischen Phosphites.

9. Der Prozess zur thermischen Stabilisierung eines Polymer enthaltenden Chlors gemäß Patentanspruch 8), das im genannten, das Polymer enthaltenden Chlor dispergiert emthält:
a)von 0. von 5 bis 2,0 phr eines Esters epoxidierter Fettsäuren und tertiärer Alkanolamine;
b)von 0,01 bis 0,5 phr eines anorganischen Salzes, das gewählt wurde unter Perchloraten, Hexafluorphosphaten, Hexafluorantimonaten, Tetrafluorboraten, Trifluorazetaten, Trifluormethansulfonaten (Triflate), Phosphorwolframate und deren Gemische;
c) von 0,01 bis 5,0 phr eines anorganischen Phosphites.

10. Der Prozess zur thermischen Stabilisierung eines Polymer enthaltenden Chlors gemäß Patentanspruch 8), das im genannten, das Polymer enthaltenden Polymer dispergiert emthält:
**0,1** bis 5,0 phr Beta-Diketon und/oder sterisch behinderte Phenolverbindungen.

11. Der Prozess zur thermischen Stabilisierung eines Polymer enthaltenden Chlors gemäß Patentanspruch 8), bei dem das genannte Polymer enthaltende Chlor ein auf PVC basierendes Polymer ist..

12. Hergestellte Artikel, die ein thermisch stabilisiertes Polymer enthaltendes Chlor gemäß dem Prozess in Patentanspruch 8) beinhalten.

## Revendications

1. Polymère chloré stabilisé thermiquement, comprenant :
a) de 0,2 à 3,0 parties en poids sur la base de 100 parties en poids de polymère chloré (« phr ») d'un ester d'acides gras époxydés et d'alcanolamines tertiaires ;
b) de 0,01 à 5,0 phr d'un sel inorganique choisi parmi le perchlorate, l'hexafluorophosphate, l'hexafluoroantimonate, le tétrafluoroborate, le trifluoroacétate, le trifluorométhanesulfonate (triflate), le phosphotungstate et leurs mélanges ;
c) de 0,01 à 10 phr d'un phosphite organique.

2. Polymère chloré stabilisé thermiquement selon la revendication 1, comprenant :
a) de 0,5 à 2,0 phr d'un ester d'acides gras époxydés et d'alcanolamines tertiaires ;
b) de 0,01 à 0,5 phr d'un sel inorganique choisi parmi le perchlorate, l'hexafluorophosphate, l'hexafluoroantimonate, le tétrafluoroborate, le trifluoroacétate, le trifluorométhanesulfonate (triflate), le phosphotungstate et leurs mélanges ;
c) de 0,01 à 5,0 phr d'un phosphite organique.

3. Polymère chloré stabilisé thermiquement selon la revendication 1, dans lequel lesdits esters d'acides gras époxydés avec des alcanolamines (a) sont obtenus par transestérificatlon à partir d'esters choisis parmi de l'huile de soja époxydée, de l'huile de lin époxydée, de l'huile de colza époxydée, du dioléate de propylèneglycol époxydé ou leurs mélanges et à partir d'alcanolamines tertiaires choisies dans le groupe constitué de triéthanolamine, triisopropanolamine, N-méthyldiéthanolamine, N,N-diméthyléthanolamine, N,N-diméthylisopropanolamine et dihydroxylalkylamine grasse et leurs mélanges.

4. Polymère chloré stabilisé thermiquement selon la revendication 3, dans lequel lesdits esters d'acides gras époxydés avec des alcanolamines (a) sont obtenus par transestérification à partir d'huile de soja époxydée, d'huile de Iln époxydée ou leurs mélanges et à partir de triéthanolamine ou trilsopropanolamine, N-méthyldiéthanolamine, dihydroxylalkylamine grasse ou leurs mélanges.

5. Polymère chloré stabilisé thermiquement selon la revendication 1, dans lequel ledit sel inorganique (b) est un perchlorate de Li, Na, K, Mg, Ca, Sr, Ba, Zn, Al ou Ce.

6. Polymère chloré stabilisé thermiquement selon la revendication 1, dans lequel le phosphite organique (c) est choisi dans le groupe constitué de trialkylphosphites, aryldialkylphosphites, diarylalkylphosphites, phosphites de di- et de polyols et leurs mélanges.

7. Polymère chloré stabilisé thermiquement selon la revendication 1, comprenant en outre de 0,1 à 5 phr de bêta-dicétone et/ou de composés phénoliques à encombrement stérique.

8. Procédé de stabilisation thermique d'un polymère chloré impliquant de disperser dans ledit polymère chloré :
a) de 0,2 à 3,0 phr d'un ester d'acides gras époxydés et d'alcanolamines tertiaires ;
b) de 0,01 à 5,0 phr d'un sel inorganique choisi parmi le perchlorate, l'hexafluorophosphate, l'hexafluoroantimonate, le tétrafluoroborate, le trifluoroacétate, le trifluorométhanesulfonate (triflate), le phosphotungstate et leurs mélanges ;
c) de 0,01 à 10 phr d'un phosphite organique.

9. Procédé de stabilisation thermique d'un polymère chloré selon la revendication 8, impliquant de disperser dans ledit polymère chloré :
a) de 0,5 à 2,0 phr d'un ester d'acides gras époxydés et d'alcanolamines tertiaires ;
b) de 0,01 à 0,5 phr d'un sel inorganique choisi parmi le perchlorate, l'hexafluorophosphate, l'hexafluoroantimonate, le tétrafluoroborate, le trifluoroacétate, le trifluorométhanesulfonate (triflate), le phosphotungstate et leurs mélanges ;
c) de 0,01 à 5,0 phr d'un phosphite organique.

10. Procédé de stabilisation thermique d'un polymère chloré selon la revendication 8, impliquant de disperser dans ledit polymère de 0,1 à 5,0 phr de bêta-cétone et/ou de composés phénoliques à encombrement stérique.

11. Procédé de stabilisation thermique d'un polymère chloré selon la revendication 8, ledit polymère chloré étant un polymère basé sur le PVC.

12. Articles manufacturés comprenant un polymère chloré stabilisé thermiquement conformément au procédé de la revendication 8,
